# EUROPEAN PATENT APPLICATION

(11) **EP 1 603 318 A2**
(43) Date of publication of application: **07.12.2005**
(21) Application number: 04256539.0
(22) Date of filing: 22.10.2004
(51) Int. Cl.: H04M 3/493, H04M 7/00

(54) **Full-featured and actionable access to directory assistence query results**

(30) Priority: 03.06.2004 US 861330
(71) Applicant: Pocketthis, Inc., Oakland, CA 94612 (US)
(72) Inventor: Sheena, Jonathan A., San Francisco, CA 94117 (US); Share, Christina L., San Francisco, CA 94110 (US); Hull, Jesse F., San Francisco, CA 94108 (US); Ebert, Christopher A., El Cerritoo, CA 94530 (US)
(74) Representative: Haines, Miles John L.S.

(57) **Abstract**

A spoken request for directory assistance is placed through a mobile telephone in a conventional manner and data representing information responsive to the request is placed in an easily accessible and actionable database for subsequent retrieval. Actions designed for the type of information, including navigation directions for information which includes a location, are associated with the information and made available to the mobile telephone. Each of these actions are available to the user with only a few key clicks on the reduced keypad of the mobile telephone and initial specification of the place of interest using the same reduced keypad is avoided by allowing the user to simply speak to identify the place of interest.

## Description

### FIELD OF THE INVENTION

This invention relates to the field of data organization systems, and more specifically to a system for organizing information accessible to two or more information browsing devices.

### BACKGROUND

The growth of the Internet over the past few years has been tremendous - both in terms of the number of people accessing information through the Internet and in terms of the amount and nature of information available through the Internet. Information services now available on the Internet include driving directions between two addresses, nearly up-to-the-minute stock quotes, and directories of addresses and telephone numbers. In addition, the Internet has been a platform for offering a number of services including, for example, purchasing goods and services, making reservations at restaurants and hotels, purchasing airline tickets, and other services pertaining to vacations and travel generally.

The accessibility of such information and services to the typical user is greatly enhanced by organization of such information and user interface tools into multimedia documents known generally as Web pages. Such multimedia documents can include images, text, audio, motion video, and active computer instructions (e.g., Java™ scripts) to effectively and efficiently communicate information to the user and to provide intuitive and self-explanatory user interface mechanisms. In addition, such multimedia documents can refer to other multimedia documents to provide a hierarchical information structure to suit the specific informational needs of individual users. These tools, while conventional, provide a highly effective information browsing experience for the user.

The user's experience is frequently described as browsing or surfing since the user picks and chooses her way through the apparent sea of information to find her own path to her own information of interest. The descriptive terms of browsing and surfing seem particularly apt as broadband Internet access increases in popularity making the Internet user's experience a truly multimedia one.

If the general Internet is an apparent sea of information, accessing the Internet through a web-capable wireless telephone seems like a trickle of information by comparison. While many Internet-capable computer systems have screen resolutions of 1024 by 768 pixels or greater, 105-key keyboards, a pointing device such as a mouse or trackball, and sound capability; most Internet-capable wireless telephones are limited to screens of much lower resolution and input keypads of little more than a dozen keys. In addition, communications bandwidth of Internet-capable wireless telephones is severely limited relative to the typical Internet-capable computer. If surfing in a sea aptly describes the typical user's experience through an Internet-capable computer, a typical user's experience in accessing information in an Internet-capable wireless telephone can sometimes feel like building a model ship in a bottle.

This limited browsing experience through mobile devices such as wireless telephones is exacerbated by the fact that the user is typically preoccupied with other activities while using the mobile device to browse information. Mobile device derive their value primarily from their mobility and are therefore likely to be used when the user is preoccupied with other activities. Mobile devices are therefore frequently used with only one hand and in manners in which the user's physical control of the mobile device is other otherwise compromised. As a result, mobile devices are not particularly well suited for handling large amounts of information and the user's interest is typically highly localized to a small amount of very specific information.

Of course, the great advantage of Internet access through a wireless telephone is the ability to access information of the apparent sea of information of the Internet while out and about - such as while commuting or while traveling away from home or while out shopping, for example. However, a better way to access information through an Internet-capable wireless telephone is highly desirable.

### SUMMARY OF THE INVENTION

In accordance with the present invention, a spoken request for directory assistance is placed through a mobile telephone in a conventional manner and data representing information responsive to the request is placed in an easily accessible and actionable database for subsequent retrieval. While much progress has been made in features and services available through the Internet for data-capable mobile telephones, one thing that has not improved much is the ease with which data can be entered using a mobile telephone's limited keypad. For example, accessing directions to a place of interest has generally required manual entry of the location of the place of interest. However, in accordance with the present invention, the user simply dials directory assistance and asks for information regarding the place of interest using her voice. This is a particularly convenient mechanism for requesting information through a mobile telephone.

In response to the request, information regarding the place of interest is retrieved from a database and can be read back to the user by an actual or synthesized voice. In addition, the information is made available to the mobile telephone through a data network. Actions designed to the type of information, including navigation directions for information which includes a location, are associated with the information and made available to the mobile telephone.

In response to a request for such navigation directions, the directions of interest are initially assumed to be from the current location of the mobile telephone to the place of interest for which information was most recently retrieved. While the user of the mobile telephone can specify alternative endpoints for navigation directions, the user can also simply accept the default endpoints. If so, the location of the mobile telephone is determined according to a mobile telephone positioning system and the location of place of interest is used as the other endpoint. Navigation directions are determined and presented to the mobile telephone for display to the user.

Other actions include dialing a telephone number associated with the retrieved information, retrieving station and schedule information of public transportation relative to a location of the retrieved information, and conducting business relative to the retrieved information. For example, if the place of interest is a movie theater, the actions can include automatically dialing the movie theater, retrieving and display movie titles and show times, the nearest public transportation station, directions to the movie theater, m-commerce purchase of movie tickets from the movie theater, etc.

Each of these actions are available to the user with only a few key clicks on the reduced keypad of the mobile telephone and initial specification of the place of interest using the same reduced keypad is avoided by allowing the user to simply speak to identify the place of interest.

### BRIEF DESCRIPTION OF THE DRAWINGS

Figure 1 is a block diagram showing a number of servers coupled through a number of networks to provide directory assistance data services in accordance with the present invention.
Figure 2 is a transactional diagram showing a directory assistance transaction and a data access transaction in accordance with the present invention.
Figure 3 shows a number of WAP pages viewable on a mobile telephone resulting from directory assistance data services in accordance with the present invention.

### DETAILED DESCRIPTION

In accordance with the present invention, the convenience of the ubiquitous directory assistance telephony- and voice-based feature provided by most telephone service providers allows a user to easily specify a location, information about which is made available through a mobile-accessible, full-featured, and actionable database. As a result, the user need not transcribe telephone numbers, addresses, or any other information from the directory assistance call. In addition, other types of information not readily available through directory assistance are immediately and conveniently available to the user. Such other types of information include maps, navigation directions, public transportation station locations and schedules, and other location-based services. The information is nearly immediately available to the user persistently through a streamlined data access protocol.

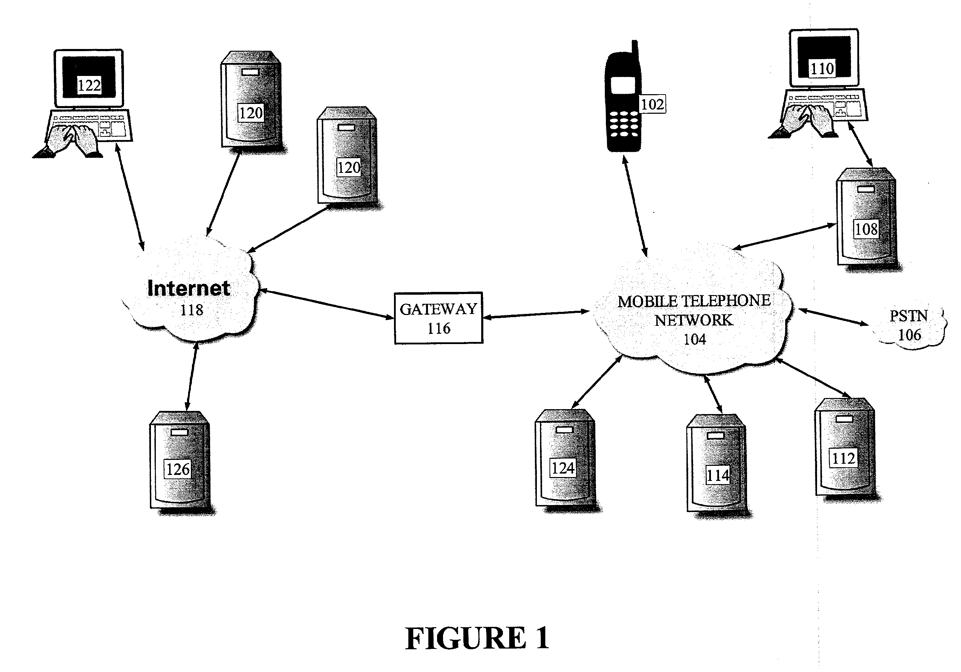

To facilitate appreciation and understanding of the present invention, an architectural overview is provided in Figure 1. A mobile telephone 102 communicates with a mobile telephone network 104 which is capable of connecting mobile telephone 102 through a public-switched telephone network (PSTN) 106 to other telephones for voice communication therewith. Mobile telephone network 104 includes a number of base stations (not shown) which communicate with mobile telephone 102 in a known and conventional wireless manner.

To provide directory assistance to the user of mobile telephone 102, a directory assistance server 108 and a directory assistance workstation 110 are coupled to mobile telephone network 104. Directory assistance server 108 contains a database of information such as telephone numbers and addresses of a number of persons and places. To query this database, the user of mobile telephone 102 places a call to a predetermined telephone number which is answered by directory assistance server 108. In the United States, the user would likely dial "411." In the United Kingdom, the user would likely dial a six-digit number beginning with "118."

In answering the call, directory assistance server 108 identifies mobile telephone 102 according to its MSISDN (Mobile Station Integrated Services Digital Network) identifier. This identifier is available to directory assistance server 108 according to a known and conventional mechanism. Directory assistance server 108 also routes the incoming call to a human operator at directory assistance workstation 110. Alternatively, directory assistance server 108 processes the call automatically using an interactive voice response (IVR) system which can include sending of synthesized speech to mobile telephone 102 and speech recognition audio signals received from mobile telephone 102. In either case, the user of mobile telephone 102 provides a query for information regarding a person or place by merely speaking into mobile telephone 102 and the query is processed by directory assistance server 108. Alternatively, the user can send an SMS message specifying a directory assistance query in some embodiments. In either case, the directory assistance query is matched with entries in an extensive and sometimes proprietary directory of telephone and address information stored in the directory database of directory assistance server 108.

A data protocol server 112 is coupled to mobile telephone network 104 to provide data services to mobile telephone 102. In this illustrative embodiment, data protocol server 112 provides data access to mobile telephone 102 according to the known Wireless Application Protocol (WAP) and provides a "home" or starting-point WAP page at which data access through mobile telephone 102 begins.

A location server 114 is coupled to mobile telephone network 104 to provide location services by which the general location of mobile telephone 102 can be determined. Location server 114 can use any of a number of currently available positioning systems to determine the general location of mobile telephone 102. Such systems include, for example, A-GPS (assisted Global Positioning System) chips, which communicate with satellites, to U-TDOA (Uplink Time Difference of Arrival) software, which measures the distance from mobile telephone 102 between multiple radio base stations.

An active mobile object (AMO) server 124 is a server computer system which collects and organizes information for efficient and convenient access through a data-capable mobile telephone such as mobile telephone 102. AMO server 124 is described more completely in co-pending and commonly owned U.S. Patent Applications 10/035,827, 10/037,489, and 10/032,826 and those descriptions are incorporated herein by reference. Briefly, AMO server 124 stores data items collected by a particular user and organizes the data items for efficient and convenient access through a mobile telephone.

Such data items are typed in that they represent a type of object such as a person, place, or thing and contain data fields representing detailed structure of the object such as street, city, postal code, category, etc. Actions are associated with respective types of data items and AMO server 124 makes those actions available through a mobile telephone. For example, AMO server 124 associates place data items with actions by which navigation directions can be retrieved to or from the place represented by the place data item. In addition, AMO server 124 associates person data items with actions which automatically dial a telephone number associated with the person represented by the person data item. Place data items can be associated with person data items, e.g., representing residential and work addresses of the person, such that the data items can have a hierarchical relationship to one another. Thus, the user of mobile telephone 102 can quickly and easily identify a person previously stored by AMO server 124, retrieve navigation directions to an addresses associated with that person, and initiate a telephone call to that person.

Some types of data items can include telephone numbers and not addresses. Examples include emergency services, airlines (for checking flight times, among other things), taxi services, etc. These types of data items have actions such as automatically placing a telephone call to the associated telephone number but lack place-based actions such as maps and directions in this illustrative embodiment. Other types of data items can have locations but not telephone numbers. Example of such data items can include scenic routes, landmarks, and other points of interest. Such data items have locations but no associated telephone numbers. Accordingly, these types of data item has actions which are place-oriented, such as retrieving maps and/or directions, but not actions for automatically placing a telephone call.

Some types of data items include associated schedules of which the user can query. Examples include theaters for movies or live performances and transportation services such as airlines, buses, and trains. A number of actions for browsing and searching such schedules are provided for data items of these types in this illustrative embodiment.

Some types of data items pertain to events for which reservations are appropriate. Examples include theaters, airlines, hotels and other accomodations, restaurants, etc. A number of actions facilitating making, viewing, and canceling reservations are associated with data items of these types in this illustrative embodiment.

Some types of data items pertain to businesses in which purchase transactions can be conducted through a mobile telephone, i.e., through m-commerce. Examples include theaters, airlines, hotels and other accomodations, take-out restaurants, etc. A number of actions facilitating conducting such purchases are associated with data items of these types in this illustrative embodiment.

Some types of data items pertain to events for which status information is available. Examples include airlines, public transportation, and traffic information services. A number of actions facilitating browsing and search for such status information are associated with data items of these types in this illustrative embodiment.

Mobile telephone network 104 is coupled, e.g., through a gateway 116, to a wide area network 118 which is the Internet in this illustrative example. While generally all computers coupled to Internet 118 are capable of both sending and receiving information, most computers are designed to serve one of two primary roles. In particular, a computer which is used by a human user to query and retrieve information for the user is generally referred to as a client computer system, e.g., client computer system 122. Conversely, a computer which is designed primarily to store, search, and provide information in response to such queries is generally referred to as a server computer system, e.g., server computer systems 120.

A map server 126 is coupled to Internet 118 and provides mapping and navigational services through Internet 118. In particular, map server 126 receives requests which include location data (e.g., an address or latitude/longitude coordinates) and provides graphical maps and/or navigation directions associated with the location data. Such mapping and navigational services are conventional. In this illustrative embodiment, map server 126 is provided by Mobile Commerce Net of Commercenet Scandinavia of Helsinki, Finland. In an alternative embodiment, map server 126 is provided by Webraska Mobile Technologies of Maisons-Laffitte, France.

It should be noted that the particular organization shown in Figure 1 is merely illustrative and for convenience of description. For example, while AMO server 124, map server 126, and other servers are shown as separate computer systems, it should be noted that multiple servers can be implemented in a single computer system running multiple computer processes to provide multiple types of services. In addition, map server 126 can be coupled to mobile telephone network 104 rather than Internet 118. Similarly, AMO server 124, data assistance server 108, data protocol server 112, and/or location server 114 can be coupled to Internet 118 rather than mobile telephone network 104. In addition, voice communication involving mobile telephone 102 and/or directory assistance workstation 110 can be routed through Internet 118 using the conventional and known Voice Over Internet Protocol (VOIP) or, alternatively, can be remotely located and accessible through PSTN 106.

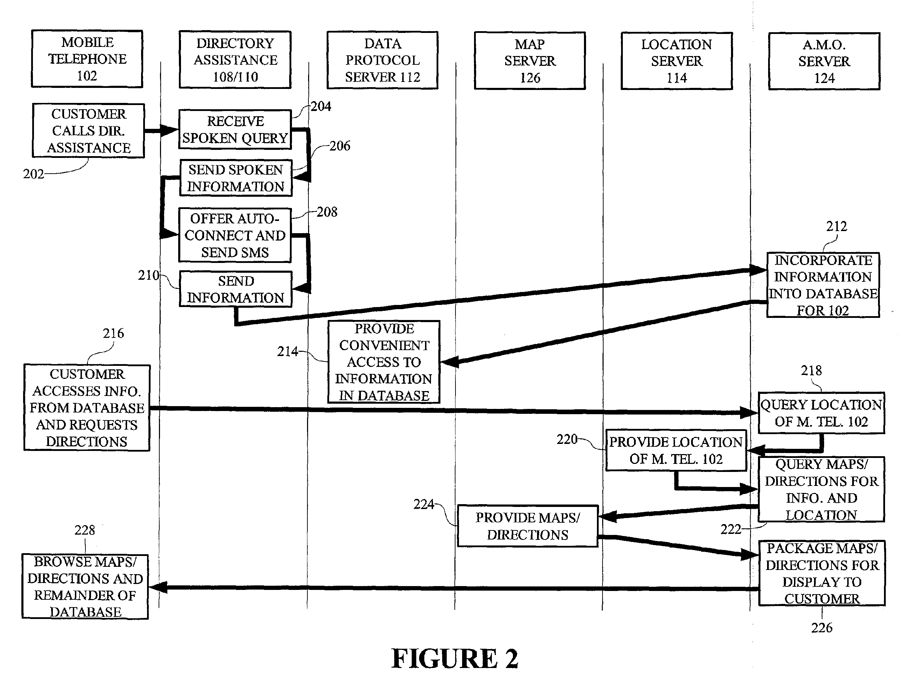

Figure 2 is a transaction diagram which illustrates information flow according to the present invention. In step 202, the user initiates a telephone call to directory assistance through mobile telephone network 104. The call is initiated using a conventional telephone dialing process with which the user is familiar and comfortable.

In step 204, directory assistance server 108 and directory assistance workstation 110, including a human operator, if any, cooperate with the user of mobile telephone 102 to receive the query from the user. Whether by interaction with a human directory assistance operator or by IVR techniques, the user of mobile telephone 102 uses comfortable and familiar voice communications to provide the directory assistance query. Such voice communications is, by far, the most convenient mechanism available to the user of a mobile telephone for conveying information through mobile telephone network 104. The user can also send the directory assistance query as a textual message, e.g., as an SMS (Short Message Service) message. While such requires that the user enters the query using a reduce keypad, the user can still avail herself of the extensive and often proprietary directory database of directory assistance server 108.

In step 206, directory assistance server 108 and/or directory assistance workstation 110, including a human operator, if any, provide the requested information in response to the directory assistance query as a voice signal to mobile telephone 102. In this way, the interaction with directory assistance is conventional for the user of mobile telephone 102.

In step 208, directory assistance server 108 and/or directory assistance workstation 110, including a human operator, if any, offer to connect a call to the person or place represented by the requested information and send a textual message to mobile telephone 102 which includes the requested information. In this illustrative embodiment, the textual message is sent according to the known and conventional Short Message Service (SMS). As a result, mobile telephone 102 stores a textual record of the requested information such that the user is not required to manually transcribe the requested information so as to remember it.

In step 210, directory assistance server 108 sends the requested information to AMO server 124 such that AMO server 124, which receives the requested information in step 212, stores the requested information in a database associated with mobile telephone 102. The information communicated to AMO server 124 includes, for example, a name of the person or place, a telephone number, a postal code, an address, the MSISDN of mobile telephone 102, and a business category or data item type if one is recorded for the requested information. In this illustrative embodiment, the requested information is sent in the form of an HTTP (HyperText Transport Protocol) request, and AMO server 124 acknowledges successful receipt and processing of the requested information by returning an HTTP response. The data itself is in the form of XML according to a design mutually agreed upon by directory assistance server 108 and AMO server 124.

AMO server 124, in storing the requested data in a database associated with the user (as identified by the MSISDN of mobile telephone 102), associates fields of the requested information with actions available to the user through mobile telephone 102. For example, the user can request automatic initiation of a telephone call to the person or place represented by the requested information. Alternatively, the user can request navigation directions to, and/or can request information about places near, the address of the person or place represented by the requested information through AMO server 124. In addition, the data items stored in AMO server 124 for mobile telephone 102 are persistent. Accordingly, the user can request such actions at a time in the future.

In one embodiment, data items stored in AMO server 124 which have not been accessed within 30 days of being received from directory assistance server 108 are discarded. In addition, if AMO server 124 does not currently have any collection of data items associated with mobile telephone 102 upon receipt of the requested information in step 212, AMO server 124 creates such a collection and associates the collection with mobile telephone 102 as identified by its MSISDN. Thereafter, the services provided by AMO server 124 are available through mobile telephone 102, including the full-featured actionable access to the requested information as described below.

Lastly, in step 212, AMO server 124 sends a message to data protocol server 112 indicating that the data item is available to mobile telephone 102 through AMO server 124.

In step 214, data protocol server 112 makes the data item available to mobile telephone 102 by including a link to the data item in the starting-point WAP page associated with mobile telephone 102 such that the data item can be reached from the starting-point WAP page with a relatively few user input gestures. The link identifies the data item within AMO server 124 such that activation of the link retrieves the data item from AMO server 124 to mobile telephone 102.

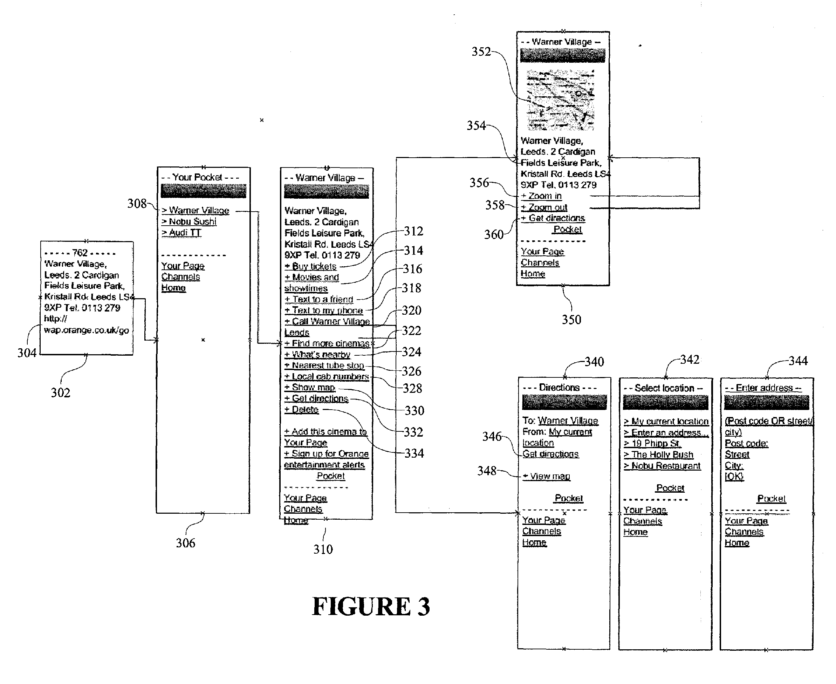

Thus, shortly after placing a simple voice telephone call to directory assistance, mobile telephone 102 has received a textual message which includes a link to the information in a conveniently accessible and actionable format. An illustrative example of such a textual message is shown as SMS message 302 in Figure 3. Figure 3 illustrates an organization of information requested through mobile telephone 102 according to the present invention. SMS message 302 includes a link 304 which specifies data protocol server 112 ((1) as the server to which the link is addressed. Mobile telephone 102 supports active links in SMS messages such that activation of link 304 by the user of mobile telephone 102 using conventional user interface techniques generates an HTTP request addressed to data protocol server 112 and sends the request to data protocol server 112. In alternative embodiments, SMS message 302 is replaced with a Multimedia Message System (MMS) message which can include active links or is replaced with a pushed WAP page. A pushed WAP page is a WAP URL (Universal Resource Locater) which causes mobile telephone 102 to issue an HTTP request of the received WAP URL such that message 302 appears in the form of a WAP page. In all these embodiments, the user receives message 302 which includes an active link 304 which can be easily and immediately activated by the user of mobile telephone 102.

Data protocol server 112 redirects the request to AMO server 124 and AMO server 124 responds to the request by sending a WAP page 306 ((3) to mobile telephone 102. WAP page 306 represents all items associated with mobile telephone 102 ((1) within AMO server 124. In this illustrative embodiment, AMO server 124 lists most recently stored data items first within WAP page 308 ((3). Accordingly, the data item representing the recently requested information from directory assistance is listed first as item 308. Item 308 is an active link within WAP page 306, and the user of mobile telephone 102 can easily and immediately activate the link using conventional user interface techniques.

Activation of the link of item 308 by the user of mobile telephone 102 causes AMO server 124 to send WAP page 310 to mobile telephone 102. WAP page 310 represents all the information of SMS message 302, which represents a subject movie theater in this illustrative example, and associates a number of actions with that information in an immediately accessible and actionable manner. In particular, WAP page 310 includes links 312-334, activation of which by the user of mobile telephone 102 cause mobile telephone 102, either alone or in cooperation with AMO server 124, to do the following respective tasks: (312) conduct a purchase of tickets to see a movie at the subject movie theater through mobile telephone 102; (314) provide information regarding titles and show times of movies playing at the subject movie theater; (316) forward the information of WAP page 310 to another mobile telephone; (318) forward the information of WAP page 310 to mobile telephone 102 so that the information of WAP page 310 is persistently available, even when mobile telephone network 104 is unreachable through mobile telephone 102; (320) initiate a telephone call to the telephone number of the subject movie theater as listed above; (322) provide information regarding other, nearby movie theaters; (324) provide information regarding other businesses that are relatively near the subject movie theater; (326) provide information regarding the public transportation station that is nearest the subject movie theater; (328) provide telephone numbers of companies that provide taxi services to the subject movie theater; (330) display a map of the area around the subject movie theater; (332) provide navigation directions to the subject movie theater; and (334) delete the information displayed in WAP page 310.

It should be appreciated that the variety of actions available through WAP page 310 is significant and that they are all available to through mobile telephone 102 by merely placing a voice telephone call to directory assistance. Many of the actions of links 312-334 provide services previously not available through directory assistance. For example, the user can simply call directory assistance to inquire of a movie theater and then quickly and easily complete an m-commerce purchase of movie tickets for that theater through link 312. Furthermore, the user can find her way to the subject movie theater using public transportation (through link 326), taxi service (through link 328), or by walking or driving (through links 330-332). It should also be noted that once the user requests information regarding taxi service through link 328, a WAP page similar to WAP page 310 is presented to mobile telephone 102 and the user can conveniently place a voice call to such a taxi service through a link similar to link 320.

If the user of mobile telephone 102 selects link 332, AMO server 124 ((1) responds by sending WAP page 340 ((3). WAP page 340 provides the user the opportunity to specify origin and destination locations before getting navigation directions. As shown, the destination is initially assumed to be the address of the subject movie theater as shown in WAP page 310. In addition, the origin is initially assumed to be the location of mobile telephone 102. If the user wishes to specify a different origin, the user activates a link associated with the currently specified origin and AMO server 124 sends WAP page 342 in response. WAP page 342 allows the user to select an origin location from the current location of mobile telephone 102 or any of a number of previously stored places or to manually enter a specific address. If the user indicates that a specific address is to be manually entered, AMO server 124 responds by sending WAP page 344 which allows the user to specify such an address manually. The user can specify an alternative destination location in an analogous manner. In short, location specification in the manner described above with respect to WAP pages 340-344 allows the user to identify origin and destination locations for requesting navigation directions without entering addresses letter-by-letter using the reduced keypad of little more than a dozen keys.

When the user is satisfied that both the origin and destination are correctly indicated, the user activates link 346 to request navigation directions from the origin to the destination. The collection of such navigation directions is illustrated in Figure 2. In step 216, the user activates link 346 and mobile telephone 102 sends the URL of the link to AMO server 124. In step 218, AMO server 124 receives the URL and, in response, sends a request to location server 114 to determine the general location of mobile telephone 102 if either the origin or destination of the requested navigation directions is specified as the current location of mobile telephone 102. AMO server 124 identifies mobile telephone 102 by its MSISDN identifier and communicates the MSISDN identifier to location server 112 such that location server 112 knows which mobile telephone is to be located.

In step 220, location server 112 determines the general location of mobile telephone. Various mobile telephone positioning techniques have varying degrees of accuracy. Accordingly, the specificity with which location server 112 can locate mobile telephone 102 can be limited. As mobile telephone positioning techniques improve, location server 112 will be able to determine rather specific locations of mobile telephones. Location server 112 provides the general location of mobile telephone 102 to AMO server 124, e.g., in the form of latitude and longitude coordinates.

In step 222, AMO server 124 sends a request for navigation directions between the specified origin and destination to map server 126. In step 224, map server 126 determines a route from the origin to the destination and sends data representing that route to AMO server 124.

In step 226, AMO server 124 packages the data representing the route into WAP pages to be sent to mobile telephone 102 to effectively communicate navigational directions to mobile telephone 102. In step 228, mobile telephone 102 displays the WAP pages which collectively represent the navigation directions to the user. The user is free to continue browsing information of AMO server 124 which is associated with mobile telephone 102.

WAP page 340 ((3) includes a link 348 by which the user of mobile phone 102 can ask to see a map of the destination specified in WAP page 340. In response to activation of either link 348 or link 330, AMO server 124 sends WAP page 350.

WAP page 350 includes a map 352 centered about the location of the subject movie theater, information 354 from WAP page 310, and links 356-360. AMO server 124 gets map 352 from map server 126, providing the location of the subject movie theater as the center of the map and a scale factor. In one embodiment, map server 126 accepts an address as specifying a location for the center of map 352. In an alternative embodiment, map server 126 requires latitude and longitude coordinates for the center of the map. In this alternative embodiment, AMO server 124 queries map server 126 separately for latitude and longitude coordinates corresponding to the address of the subject movie theater prior to requesting map 352 using those coordinates.

Links 356-360, when activated by the user of mobile telephone 102, cause AMO server 125 to perform the following respective tasks: (356) request a new map from map server 126 with a larger scale such that less of map 352 is shown in greater detail and to send a replacement for WAP page 350 with the new map; (358) request a new map from map server 126 with a smaller scale such that more area is shown in less detail and to send a replacement for WAP page 350 with the new map; and (360) send WAP page 340 to mobile telephone 102 such that the user can request navigation directions associated with the subject movie theater.

It should be appreciated that WAP pages 310, 340, 342, 344, and 350 can be larger than the display area of mobile telephone 102. However, mobile telephone 102 includes logic for displaying a subset of a WAP page and allowing the user to scroll the WAP page to change the particular subset of the WAP page viewable at any particular time. However, for clarity of illustration, WAP pages 310, 340, 342, 344, and 350 are shown in their entirety in Figure 3.

The above description is illustrative only and is not limiting. Instead, the present invention is defined solely by the claims which follow and their full range of equivalents.

## Claims

1. A method for serving a request for information requested through a voice- and data-capable device, the method comprising:
receiving a spoken query through the device according to a voice communication protocol; and
in response to the query, storing information responsive to the query in a database for subsequent retrieval by the device according to a data communication protocol.

2. The method of Claim 1 further comprising:
sending the information as a voice signal to the device according to a voice communication protocol.

3. The method of Claim 1 further comprising:
sending the information as a textual message according to a message protocol.

4. The method of Claim 3 wherein the message protocol and the data communication protocol are one and the same protocol.

5. The method of Claim 3 wherein the message includes a link to the information in the database such that activation of the link by a user of the device causes retrieval of the information from the database by the device.

6. A method for serving a request for information requested through a voice- and data-capable device, the method comprising:
receiving information which was previously retrieved from a database in response to a spoken query from the device; and
storing the information in a manner that causes the information to be subsequently retrievable by the device.

7. The method of Claim 6 wherein the spoken query was previously transmitted by the device through a mobile telephone network.

8. The method of Claim 6 further comprising:
determining a type of the information.

9. The method of Claim 8 wherein storing the information comprises:
storing the information in accordance with the type of the information.

10. The method of Claim 9 wherein storing the information comprises:
associating actions with the information in accordance with the type of the information.

11. The method of Claim 10 wherein associating actions comprises:
including user-interface mechanisms with the information when sending the information to the device in response to a request therefor.

12. The method of Claim 10 wherein the type of information includes a place and the actions include retrieval of navigation directions relative to the place.

13. The method of Claim 12 wherein the navigation directions are also relative to a location of the device.

14. The method of Claim 13 wherein the place of the information is predetermined to be the destination of the navigation directions and the location of the device is predetermined to be the origin of the navigation directions.

15. The method of Claim 13 further comprising:
receiving a request from the device to provide the navigation directions; and in response to the request:
determining the location of the device;
determining the navigation directions between the location of the device and the place of the information; and
sending the navigation directions to the device.

16. A computer readable medium useful in association with a computer which includes a processor and a memory, the computer readable medium including computer instructions which are configured to cause the computer to serve a request for information requested through a voice- and data-capable device by the method of any one of Claims 1 to 15.

17. A computer system comprising:
a processor;
a memory operatively coupled to the processor; and
a server module (i) which executes in the processor from the memory and (ii) which, when executed by the processor, causes the computer to serve a request for information requested through a voice- and data-capable device by the method of any one of Claims 1 to 15.

18. A computer system comprising:
a processor;
a memory operatively coupled to the processor; and
a server module (i) which executes in the processor from the memory and (ii) which, when executed by the processor, causes the computer to serve a request for information requested through a voice- and data-capable device by:
receiving information which was previously retrieved from a database in response to a spoken query from the device; and
storing the information in a manner that causes the information to be subsequently retrievable by the device.

19. The computer system of Claim 18 wherein the spoken query was previously transmitted by the device through a mobile telephone network.

20. The computer system of Claim 18 wherein the server module, when executed by the processor, causes the computer to serve a request for information requested through a voice- and data-capable device by also:
determining a type of the information.

21. The computer system of Claim 20 wherein storing the information comprises:
storing the information in accordance with the type of the information.

22. The computer system of Claim 21 wherein storing the information comprises:
associating actions with the information in accordance with the type of the information.

23. The computer system of Claim 22 wherein associating actions comprises:
including user-interface mechanisms with the information when sending the information to the device in response to a request therefore.

24. The computer system of Claim 22 wherein the type of information includes a place and the actions include retrieval of navigation directions relative to the place.

25. The computer system of Claim 24 wherein the navigation directions are also relative to a location of the device.

26. The computer system of Claim 25 wherein the place of the information is predetermined to be the destination of the navigation directions and the location of the device is predetermined to be the origin of the navigation directions.

27. The computer system of Claim 25 wherein the server module, when executed by the processor, causes the computer to serve a request for information requested through a voice- and data-capable device by also:
receiving a request from the device to provide the navigation directions; and in response to the request:
determining the location of the device;
determining the navigation directions between the location of the device and the place of the information; and
sending the navigation directions to the device.
